# EUROPEAN PATENT SPECIFICATION

(11) **EP 3 748 722 B1**
(45) Date of publication and mention of the grant of the patent: **03.05.2023**
(21) Application number: 19882604.2
(22) Date of filing: 18.10.2019
(51) Int. Cl.: H01M 50/213, H01M 50/24, H01M 50/244, H01M 50/258, H01M 50/50

(54) **BATTERY PACK COMPRISING MOUNTING STRUCTURE**
BATTERIEPACK MIT MONTAGESTRUKTUR
BLOC-BATTERIE COMPRENANT UNE STRUCTURE DE MONTAGE

(30) Priority: 05.11.2018 KR 20180134724
(43) Date of publication of application: 09.12.2020
(73) Proprietor: LG Energy Solution, Ltd., Seoul 07335 (KR)
(72) Inventor: YANG, Jin-Oh, Daejeon 34122 (KR); YANG, Kun-Joo, Daejeon 34122 (KR); YOON, Seog-Jin, Daejeon 34122 (KR)
(74) Representative: Plasseraud IP
(86) International application number: PCT/KR2019/013789
(87) International publication number: WO 2020/096221

(56) References cited:
- GB-A- 2 560 039
- KR-A- 20170 084 699
- KR-B1- 100 726 503
- KR-B1- 101 486 928
- KR-B1- 101 720 636
- KR-B1- 101 816 355
- US-A1- 2015 079 449
- US-A1- 2016 006 006
- US-A1- 2017 110 753

## Description

### TECHNICAL FIELD

The present disclosure relates to a battery pack including a mounting structure, and more particularly, to a battery pack having improved manufacturing efficiency, high energy density and enhanced product stability.

### BACKGROUND ART

A secondary battery is highly applicable to various products and has electrical characteristics with high energy density. The secondary battery is applied not only to portable electronic devices but also to electric vehicles, hybrid electric vehicles, power storage devices, and the like, driven by an electric driving source.

The secondary battery is attracting attention as a new energy source for improving eco-friendliness and energy efficiency since the use of fossil fuels is significantly reduced and no by-product is generated during the use of energy.

A battery pack applied to an electric vehicle has a structure in which a plurality of battery modules, each having a plurality of battery cells, are connected to obtain a high output. In addition, each battery cell is an electrode assembly including positive and negative electrode current collectors, a separator, an active material, an electrolyte, and the like, and may be repeatedly charged and discharged by an electrochemical reaction between the components.

Recently, as the need for a large-capacity structure is increased along with the utilization as an energy storage source, the demand for a battery pack having a multi-module structure in which a plurality of battery modules, in each of which a plurality of secondary batteries are connected in series and/or in parallel, are aggregated is increased. At this time, the battery pack may be configured such that the plurality of battery modules are closely arranged in a front and rear direction in order to accommodate a large number of battery modules in a limited space.

In addition, the conventional battery pack has a metal plate configured to electrically connect the plurality of battery modules to each other and to electrically connect the plurality of cylindrical battery cells provided in each battery module.

However, if the plurality of battery modules are closely arranged in the front and rear direction, in order to connect the metal plate mounted to one battery module with a metal plate of another battery module, it is necessary to provide a separate space in a module housing of the battery module for welding the metal plates.

For this reason, the conventional battery module has a limit in having a larger number of cylindrical battery cells since a dead space is formed in the module housing, and thus the energy density of the battery pack is greatly reduced.

Moreover, as a large capacity battery pack is recently required more and more, a need for a mounting structure capable of stably mounting a plurality of battery modules and protecting the battery pack from external impacts is increasing.

That is, in the conventional art, in order to stably mount and fix a plurality of battery modules to a mounting structure, a plurality of fixing members are required, or a huge mounting structure needs to be provided. Accordingly, the cost and time for manufacturing the battery pack is greatly increased.

US 2016/006006 discloses a battery module that includes a plurality of battery blocks, and connecting member for aligning and connecting the plurality of battery blocks in a predetermined arrangement direction. Each of battery blocks includes the following elements: a plurality of batteries longitudinally aligned with each other; battery case for arranging and holding the plurality of batteries; lid as a positive electrode-side insulating lid, disposed at positive electrode-side ends of batteries in battery case, for insulating positive electrodes of the batteries from positive electrode current collecting plate; lid as a negative electrode-side insulating lid, disposed at negative electrode-side ends of batteries in battery case, for insulating negative electrodes of batteries from a negative electrode current collecting plate; and at least a pair of guide grooves disposed on lid and extending in a direction parallel to each other. A pair of sliding parts provided to the connecting member is fitted into guide grooves.

### DISCLOSURE

### Technical Problem

The present disclosure is designed to solve the problems of the related art, and therefore the present disclosure is directed to providing a battery pack having improved manufacturing efficiency, high energy density and enhanced product stability.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

The invention is defined by independent claims 1 and 12.

According to claim 1, there is provided a battery pack, comprising:
a mounting structure including a first frame formed in a plate shape whose both ends are bent upward to form an inner space and a second frame formed in a plate shape whose both ends are bent downward to form an inner space;
a first battery module group accommodated in the inner space of the first frame and including a plurality of battery modules; and
a second battery module group accommodated in the inner space of the second frame and including a plurality of battery modules.

Also, each of the first battery module group and the second battery module group includes a plurality of battery modules arranged in a front and rear direction.

Moreover, the battery module includes:
a plurality of cylindrical battery cells having electrode terminals respectively formed at upper and lower portions thereof and arranged in a horizontal direction;
a module housing having a plurality of hollows formed therein such that the cylindrical battery cells are inserted and accommodated therein; and
a connection plate having a body part located at an upper portion or a lower portion of the plurality of cylindrical battery cells and having a plurality of connection terminals provided at a portion thereof to electrically contact an electrode terminal formed at one of the plurality of cylindrical battery cells, and a connection part configured to protrusively extend in a left direction or a right direction from the body part so that the protrusively extending portion is bent upward or downward from the body part, the bent end of the connection part being configured to contact a portion of another connection plate.

In addition, the connection part of the connection plate has an expanding
structure to protrusively extend forward further to a foremost terminal portion of the module housing or to protrusively extend rearward further to a rearmost terminal portion thereof.

Further, the connection plate includes a first connection plate at which the body part is located at the upper portion of the plurality of cylindrical battery cells and the connection part protrusively extending from the body part is bent downward, and a second connection plate at which the body part is located at the lower portion of the plurality of cylindrical battery cells and the connection part protrusively extending from the body part is bent upward.

Also, the connection part of the first connection plate is provided to contact the connection part of the second connection plate provided to another battery module.

Moreover, the module housing may include a fixing tube located at an outer side in a left and right direction and having a hollow structure perforated in an upper and lower direction so that a terminal portion of the hollow structure protrusively extends in the upper and lower direction further to the other portion of an upper surface or a lower surface of the module housing.

In addition, a guide hole perforated in the upper and lower direction may be formed in the body part so that the terminal portion of the fixing tube protruding in the upper and lower direction is inserted therein.

Also, the connection part may be located to face left and right outer sides of the fixing tube.

Moreover, an insert portion protrusively extending upward may be formed at a bottom surface of the inner space of the first frame so as to be inserted into the hollow structure of the fixing tube of the first battery module group.

In addition, an insert portion protrusively extending downward may be formed at a ceiling surface of the inner space of the second frame so as to be inserted into the hollow structure of the fixing tube of the second battery module group.

Further, a beading structure ridged in an upper and lower direction or in a front and rear direction may be formed on at least one of the bent portions of the first frame and the second frame, a bottom surface of the inner space of the first frame, and a ceiling surface of the inner space of the second frame.

Also, electric components configured to detect currents of the first battery module group and the second battery module group or control operations thereof may be mounted to an outer side of the bent portions of the first frame and the second frame.

Moreover, an open region may be formed at the bent portion of each of the first frame and the second frame so that an electric component bus bar configured to electrically connect the connection plate and the electric components to each other protrusively extends out therethrough.

In addition, the battery pack may further comprise a connection bus bar having an electric conductive material and configured to electrically connect the first battery module group and the second battery module group.

Further, the connection bus bar may include a first access portion configured to contact the connection plate of the first battery module group, a second access portion configured to contact the connection plate of the second battery module group, and a detouring portion having both ends respectively connected to the first access portion and the second access portion and stepped from the first access portion and the second access portion to the outside.

Also, a thermal conductive pad may be added to at least a portion of an outer side surface of the connection plate.

Moreover, the mounting structure may further include an upper plate located to cover an upper portion of the first frame; and a lower plate located to support a lower portion of the second frame upward.

In addition, a second insert portion protrusively extending inward may be formed at the upper plate or the lower plate.

Further, in another aspect of the present disclosure, there is also provided an electronic device, comprising the battery pack according to the present disclosure.

Also, in another aspect of the present disclosure, there is also provided a vehicle, comprising the battery pack according to the present disclosure.

### Advantageous Effects

According to the invention, the mounting structure of the present disclosure is configured by coupling the first frame and the second frame separated from each other. Thus, different from an 'H'-shaped structure configured integrally, the mounting structure may be simply manufactured by a small manufacturing facility, which greatly reduces the manufacturing cost.

Further, since the mounting structure of the present disclosure has the extending portion bent from both front and rear ends of the accommodation portion of the first frame to extend upward, when an external impact occurs at the extending portion, the impact may be absorbed by and propagated to the second frame connected to the first frame, thereby effectively protecting the battery module accommodated therein. In particular, it is excellent to defend against collisions in the front and rear direction.

Thus, according to the invention, since the battery pack of the present disclosure includes the connection plate having the body part mounted to the upper portion or the lower portion of the module housing and the connection part extending in the left and right direction of the body part and bent upward or downward, the plurality of connection plates contact and connect at the left and right outer sides of the module housing, unlike the conventional battery pack.

Accordingly, when compared with the prior art, it is unnecessary to secure a space in the front and rear direction for the contact and connection between the connection plates inside the module housing, so the battery module may be designed slimmer in the front and rear direction. Ultimately, the energy density of the battery pack may be greatly increased.

Moreover, according to an embodiment of the present disclosure, as the overlapped portion of the connection parts of the first connection plate and the second connection plate is located to face the left outer side or the right outer side of the fixing tube, the cylindrical battery cell accommodated in the battery module may be spaced apart from the welding location of the overlapped portion by a predetermined distance. Accordingly, the amount of heat generated during the welding process of the connection part may be transferred to the cylindrical battery cell of the battery module to the minimum, thereby preventing the performance degradation of the cylindrical battery cell caused by the welding heat and thus effectively reducing the defective rate.

In addition, since the insert portions are formed at the first frame and the second frame, respectively, the plurality of battery modules respectively provided to the first battery module group and the second battery module group may be effectively fixed without movement.

Moreover, in the conventional technique, a process of inserting and fixing the long bolts and the bushings into the plurality of battery modules, respectively, in a state where the plurality of battery modules are mounted to the mounting structure is performed, and this process requires a precise work, which consumes much manufacturing time. Moreover, providing the long bolts and the bushings requires a large material cost and serves as a major cause of increasing the weight of the battery pack. Meanwhile, in the present disclosure, in place of the plurality of long bolts and bushings, the insert portions are applied to the first frame and the second frame. In this case, the plurality of battery modules may be fixed simultaneously with being mounted to the mounting structure, thereby reducing manufacturing time, avoiding large material costs and effectively reducing the weight of the battery pack.

In addition, according to an embodiment of the present disclosure, since the beading structures are formed at the first frame and the second frame, the mechanical rigidity of the first frame and the second frame may be enhanced. Further, since the beading structures formed at the extending portions of the first frame and the second frame may serve to absorb (buffer) the impact force caused by the movement in the front and rear direction of the first battery module group and the second battery module group accommodated in the first frame and the second frame, it is possible to improve the stability and durability of the plurality of accommodated cylindrical battery cells.

Further, according to an embodiment of the present disclosure, since the mounting structure further includes the upper plate and the lower plate, it is possible to transfer the heat accumulated in the first frame, the second frame, the first battery module group and the second battery module group to the outside. That is, since the upper plate and the lower plate are configured to contact a part of the first frame, the second frame, the first battery module group and the second battery module group, the heat transfer efficiency is maximized, thereby effectively increasing the heat dissipation effect of the battery pack.

Also, according to an embodiment of the present disclosure, since the upper plate and the lower plate respectively have the fixing groove for fixing the first frame and the second frame, it is possible to effectively prevent the first frame and the second frame from moving due to an external impact while the battery pack is in use, thereby improving durability and safety of the battery pack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing a battery pack according to an embodiment of the present disclosure.
FIG. 2 is an exploded perspective view schematically showing some components of the battery pack of FIG. 1.
FIG. 3 is a front perspective view schematically showing some battery modules of the battery pack according to an embodiment of the present disclosure.
FIG. 4 is a rear perspective view schematically showing some battery modules of the battery pack according to an embodiment of the present disclosure.
FIG. 5 is an exploded perspective view schematically showing components of some battery modules of the battery pack according to an embodiment of the present disclosure.
FIG. 6 is a side view schematically showing the battery pack according to an embodiment of the present disclosure.
FIG. 7 is an enlarged perspective view schematically showing a region A of some components of the battery pack of FIG. 2.
FIG. 8 is a perspective view schematically showing a connection bus bar, employed to a battery pack according to another embodiment of the present disclosure.
FIG. 9 is a perspective view schematically showing some components of the battery pack according to another embodiment of the present disclosure.
FIG. 10 is a bottom perspective view schematically showing some components of the battery pack according to another embodiment of the present disclosure.
FIG. 11 is a perspective view schematically showing a battery pack according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

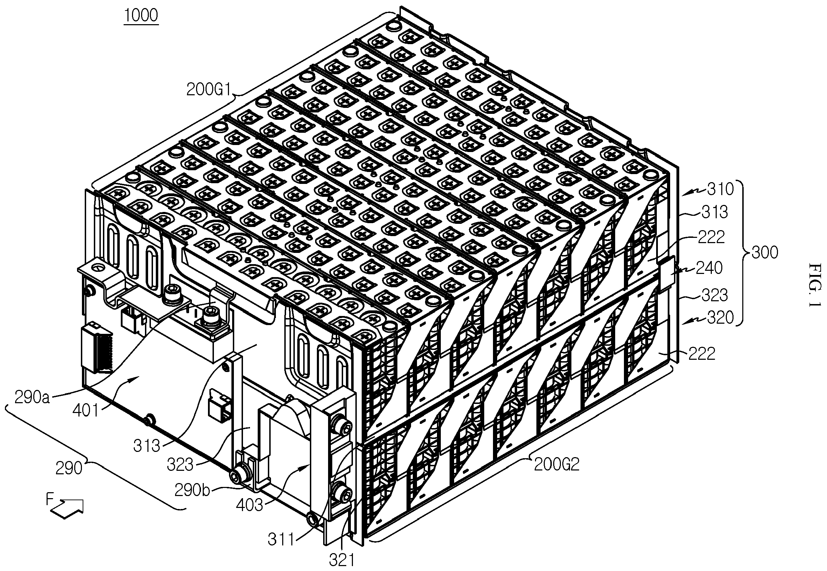

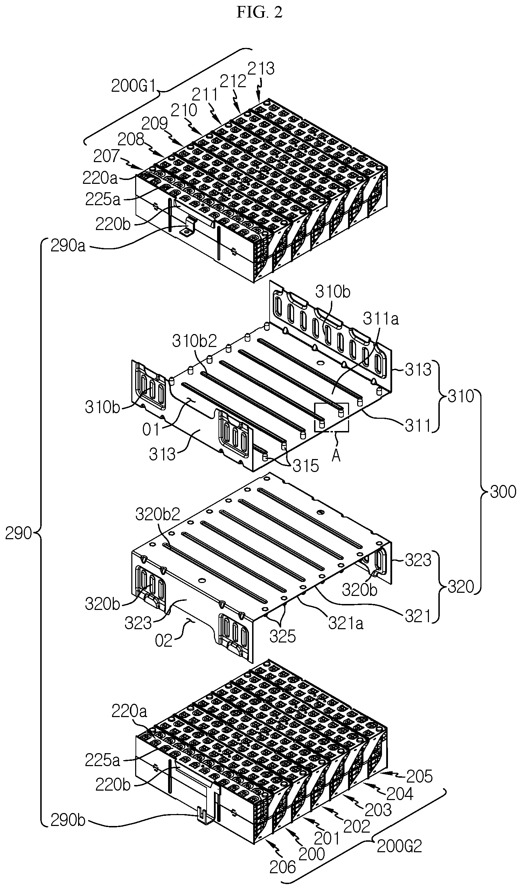

FIG. 1 is a perspective view schematically showing a battery pack according to an embodiment of the present disclosure. Also, FIG. 2 is an exploded perspective view schematically showing some components of the battery pack of FIG. 1.

Referring to FIGS. 1 and 2, a battery pack 1000 of the present disclosure includes a mounting structure 300, a first battery module group 200G1, and a second battery module group 200G2.

Here, the first battery module group 200G1 and the second battery module group 200G2 may include a plurality of battery modules 200, 201, 202, 203, 204, 205, 206, 207, 208, 209, 210, 211, 212, 213.

Specifically, the first battery module group 200G1 includes a plurality of battery modules 207, 208, 209, 210, 211, 212, 213 arranged in a front and rear direction. In addition, the second battery module group 200G2 is located below the first battery module group 200G1 and includes a plurality of battery modules 200, 201, 202, 203, 204, 205, 206 arranged in the front and rear direction.

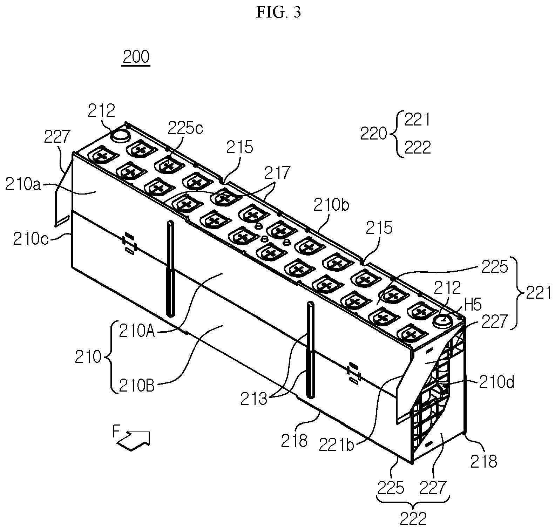

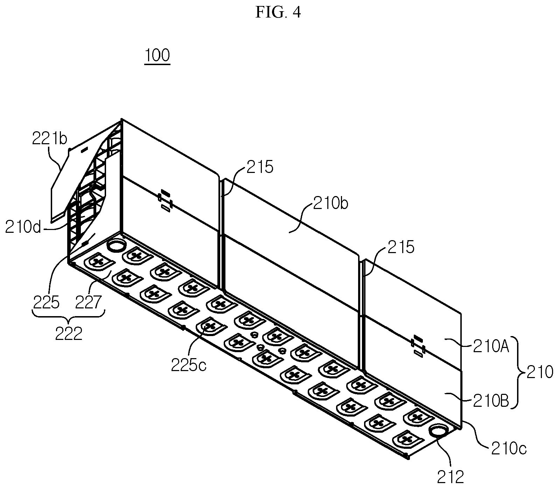

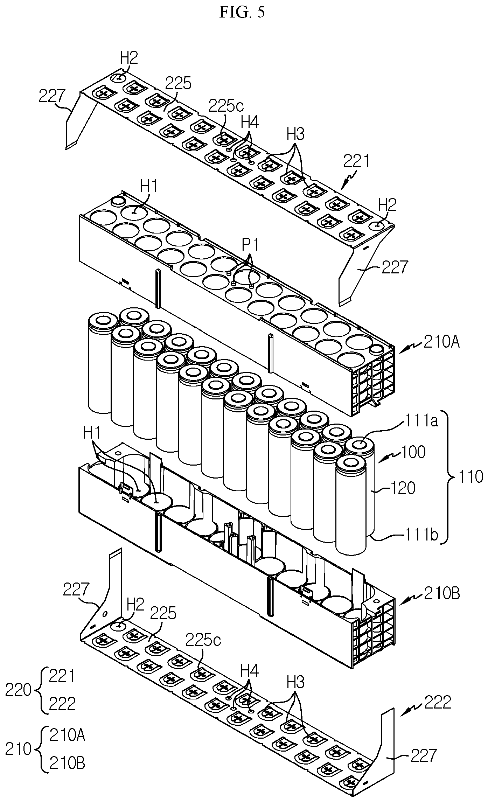

FIG. 3 is a front perspective view schematically showing some battery modules of the battery pack according to an embodiment of the present disclosure. FIG. 4 is a rear perspective view schematically showing some battery modules of the battery pack according to an embodiment of the present disclosure. Also, FIG. 5 is an exploded perspective view schematically showing components of some battery modules of the battery pack according to an embodiment of the present disclosure.

Referring to FIGS. 3 to 5, a battery module 200 includes a plurality of cylindrical battery cells 100, a module housing 210, and a connection plate 220.

Here, the cylindrical battery cell 100 may include a cylindrical battery can 120 and an electrode assembly (not shown) accommodated in the battery can 120.

In addition, the cylindrical battery cell 100 is configured such that the battery can 120 stands up in an upper and lower direction. In addition, the battery can 120 includes a material having high electrical conductivity, and for example, the battery can 120 may include aluminum or copper.

Also, electrode terminals 111a, 111b may be formed at upper and lower portions of the battery can 120, respectively. Specifically, a first electrode terminal 111a may be formed on a flat circular upper surface at a top end of the battery can 120, and a second electrode terminal 111b may be formed on a flat circular lower surface at a bottom end of the battery can 120.

In addition, an electrical insulation member may be coated on a side of the battery can 120.

That is, since the battery can 120 is electrically connected to an electrode of the electrode assembly therein, an insulating film (not shown) or an electrically insulating adhesive surrounding the side of the battery can 120 may be coated to prevent that an unintended conductive object contacts the battery can 120 to cause electric leakage.

In addition, the electrode assembly (not shown) may be wound in a jelly-roll type with a separator being interposed between a positive electrode and a negative electrode. Moreover, a positive electrode tab may be attached to the positive electrode (not shown) and connected to the first electrode terminal 111a at the top end of the battery can 120. Also, a negative electrode tab may be attached to the negative electrode (not shown) and connected to the second electrode terminal 111b at the bottom end of the battery can 120.

Further, when viewed in an F direction, the plurality of cylindrical battery cells 100 may be arranged in a horizontal direction in a standing-up form in the upper and lower direction inside the module housing 210.

For example, as shown in FIG. 4, one battery module 200 includes 23 cylindrical battery cells 100. The 23 cylindrical battery cells 100 are arranged to be adjacent to each other in the horizontal direction in a standing-up form in the upper and lower direction. Further, the positive electrode of the cylindrical battery cell 100 may be formed at a top end thereof and the negative electrode may be formed at a bottom end thereof.

Here, the terms indicating directions such as front, rear, left, right, upper and lower, used in this specification, may vary depending on the position of an observer or the shape of an object. However, in this specification, for convenience of description, the front, rear, left, right, upper and lower directions are distinguished based on the case where viewed in the F direction.

Here, the module housing 210 may have an inner space formed therein so that the plurality of cylindrical battery cells 100 are inserted and accommodated therein. Specifically, the module housing 210 may have a plurality of hollows H1 formed therein to cover an outer side surface of the cylindrical battery cell 100. Further, the module housing 210 may include left and right outer sidewalls 210c, 210d and front and rear outer sidewalls 210a, 210b.

In addition, the module housing 210 may include an upper case 210A and a lower case 210B.

Here, in the upper case 210A has a hollow H1 formed to surround an upper outer surface of the cylindrical battery cell 100. Further, the lower case 210B is fastened to a lower portion of the upper case 210A, and the hollow H1 is formed to surround a lower outer surface of the cylindrical battery cell 100.

In addition, a coupling protrusion 213 protrusively extending from an outer surface of the outer sidewall 210a may be formed at the front outer sidewall 210a of the module housing 210. Also, a guide groove 215 recessed inward from an outer surface of the outer sidewall 210b may be provided at the rear outer sidewall 210b of the module housing 210 so that the coupling protrusion 213 is inserted therein.

For example, as shown in FIG. 3, two coupling protrusions 213 may be formed at the front outer sidewall 210a of the module housing 210. Also, as shown in FIG. 3, two guide grooves 215 may be formed at the rear outer sidewall 210b of the module housing 210.

Thus, according to this configuration of the present disclosure, the coupling protrusion 213 of the module housing 210 according to the present disclosure may be inserted into a guide groove 215 of another battery module 200 to guide the arrangement of the plurality of battery modules 200. Thus, the battery modules 200 may not only be arranged easily but also be fixed to each other not to be easily separated.

In addition, the connection plate 220 includes a body part 225 and a connection part 227. Specifically, the body part 225 is located at an upper portion or a lower portion of the plurality of cylindrical battery cells 100. That is, the body part 225 is mounted to the upper portion or the lower portion of the module housing 210.

In this case, a guide protrusion P1 protruding upward or downward may be formed at the upper portion or the lower portion of the module housing 210 to guide a location at which the body part 225 of the connection plate 220 is mounted. In addition, the connection plate 220 may have a guide hole H4 perforated so that the guide protrusion P1 is inserted therein.

Further, the connection plate 220 may include an electric conductive material. For example, the electric conductive material may be a metal alloy mainly having copper, nickel, aluminum, gold, silver, and the like.

For example, as shown in FIG. 5, the battery module 200 has two connection plates 221, 222 respectively located at the upper portion and the lower portion of the plurality of cylindrical battery cells 100.

In addition, three guide holes H4 may be formed at the connection plate 221 mounted to the upper portion of the module housing 210, and three guide protrusions P1 may be formed at the upper portion of the module housing 210. Further, three guide holes H4 may be formed at the connection plate 222 mounted to the lower portion of the module housing 210, and three guide protrusions P1 (not shown) may be formed at the lower portion of the module housing 210.

Further, the body part 225 includes a plurality of connection terminals 225c provided to a portion thereof to electrically contact the electrode terminals 111 of the plurality of cylindrical battery cells 100. Specifically, at least one access opening H3 perforated in the upper and lower direction may be formed at the body part 225. In addition, the connection terminal 225c of the connection plate 220 may be formed to protrusively extend in the horizontal direction from an inner side of an edge of the access opening H3 so as to electrically contact the electrode terminals 111 formed at the plurality of cylindrical battery cells 100. Moreover, the protrusively extending end of the connection terminal 225c may have a branched structure split in two directions with respect to the protrusively extending direction.

For example, as shown in FIG. 5, 23 access openings H3 may be formed at each of the two connection plates 221, 222. In addition, 23 connection terminals 225c may be formed at the 23 access openings H3, respectively, to protrusively extend in the horizontal direction from the inner side of the edge thereof. Further, the connection terminal 225c may have a branched structure split in two directions with respect to the protrusively extending direction.

Meanwhile, the connection part 227 is formed to protrusively extend in a left direction or a right direction from the body part 225. In addition, the protrusively extending portion of the connection part 227 is bent upward or downward from the body part 225. Also, the bent end of the connection part 227 is in contact with a portion of another connection plate 220.

For example, as shown in FIGS. 3 to 5, two connection parts 227 bent downward from the left and right ends of the body part 225 are formed at the connection plate 221 mounted to the upper portion of the module housing 210. Also, the bent end of the connection part 227 is in contact with a portion of the connection plate 222 of another battery module 206.

Further, two connection parts 227 bent upwardly from the left and right ends of the body part 225 are formed at the connection plate 222 mounted to the lower portion of the module housing 210. In addition, the bent end of the connection part 227 are in contact with a portion of another connection plate 220.

Thus, according to the present disclosure, since the battery pack of the present disclosure includes the connection plate 220 having the body part 225 mounted to the upper portion or the lower portion of the module housing 210 and the connection part 227 extending in the left and right direction of the body part 225 and bent upward or downward, the plurality of connection plates 221, 222 contact and connect at the left and right outer sides of the module housing 210, unlike the conventional battery pack.

Accordingly, when compared with the prior art, it is unnecessary to secure a space in the front and rear direction for the contact and connection between the connection plates 221, 222 inside the module housing 210, so the battery module 200 may be designed slimmer in the front and rear direction. Ultimately, the energy density of the battery pack 1000 may be greatly increased.

Referring to FIGS. 3 to 5 again, the connection plate 220 include a first connection plate 221 and a second connection plate 222.

Specifically, the body part 225 of the first connection plate 221 is located at the upper portion of the plurality of cylindrical battery cells 100. In addition, the connection part 227 protrusively extending from the body part 225 is bent downward.

For example, the first connection plate 221 may be electrically connected (bonded) with the electrode terminal 111a located at the upper portion of the plurality of cylindrical battery cells 100. In addition, the connection part 227 of the first connection plate 221 may be electrically contacted (connected) with the connection part 227 of the second connection plate 222 provided to another battery module 200. In addition, the connection terminal 225c of the first connection plate 221 may be bonded to the first electrode terminals 111a of the plurality of cylindrical battery cells 100 through resistance welding.

Further, the body part 225 of the second connection plate 222 is located at the lower portion of the plurality of cylindrical battery cells 100, and the connection part 227 protrusively extending from the body part 225 is bent upward.

For example, the second connection plate 222 may be electrically connected (contacted) with the electrode terminals 111b located at the lower portion of the plurality of cylindrical battery cells 100. Further, the connection part 227 of the second connection plate 222 may electrically contact the connection part 227 of the first connection plate 221 provided to another battery module 200. In addition, the connection terminal 225c of the second connection plate 222 may be bonded to the second electrode terminals 111b of the plurality of cylindrical battery cells 100 through resistance welding.

Specifically, the connection part 227 of the first connection plate 221 has an expanding structure 221b protrusively extending forward further to the foremost terminal portion of the module housing 210. Further, the connection part 227 of the second connection plate 222 has an expanding structure (not shown) protrusively extending rearward further to the rearmost terminal portion of the module housing 210.

For example, as shown in FIGS. 1 and 2, the first battery module group 200G1 of the battery pack 1000 may include seven battery modules 207, 208, 209, 210, 211, 212, 213. In addition, the second battery module group 200G2 may include seven battery modules 200, 201, 202, 203, 204, 205, 206. Also, the battery pack 1000 may include 28 connection plates 220. In addition, the connection parts 227 of the six first connection plates 221 provided to each of the first battery module group 200G1 and the second battery module group 200G2 may be formed to protrusively extend forward further to the foremost terminal portion of the module housing 210 so as to be in contact with the connection parts 227 of the six second connection plates 222.

Further, the connection plate 220a located at the upper portion of the remaining two battery modules 206, 207 does not include the connection part, and a bent structure 220b for connecting to an electric component bus bar 290, explained later, may be formed. In addition, the second connection plate 222 of the remaining two battery modules 205, 213 may be configured such that the connection part 227 is in contact with a connection bus bar 240, explained later.

Thus, according to this configuration of the present disclosure, since the connection part 227 of at least one of the first connection plate 221 and the second connection plate 222 has the expanding structure 221b protrusively extending forward further to the foremost terminal portion of the module housing 210 or protrusively extending rearward further to the rearmost terminal portion, one connection plate 221 may contact another connection plate 222 without a separate connection member. Accordingly, the manufacturing cost of the battery pack 1000 may be reduced and the manufacturing process may be simplified.

In addition, referring to FIG. 1 again, the first battery module group 200G1 and the second battery module group 200G2 included in the battery pack 1000 may have an electric component bus bar 290.

Specifically, the electric component bus bar 290 may be provided to each of the battery modules 206, 207 located at the outermost front side. For example, as shown in FIG. 2, the electric component bus bar 290b may be electrically connected to the first connection plate 221 of the battery module 206 of the first battery module group 200G1. In addition, the electric component bus bar 290b may be bent forward and then its bent end may be bent again upward.

In addition, the electric component bus bar 290a may be electrically connected to the first connection plate 221 of the battery module 207 of the second battery module group 200G2. Further, the electric component bus bar 290a may be bent forward and then its bent end is bent again upward.

Meanwhile, the mounting structure 300 includes a first frame 310 and a second frame 320. In addition, the first frame 310 has a plate shape whose both ends are bent upward to form an inner space such that the plurality of battery modules 207, 208, 209, 210, 211, 212, 213 are mounted therein. That is, the first frame 310 may have an accommodation portion 311 having a plate shape extending in the horizontal direction with respect to the ground and an extending portion 313 bent from both front and rear ends of the accommodation portion 311 to extend upward.

Moreover, the second frame 320 has a plate shape whose both ends are bent downward to form an inner space. That is, the second frame 320 may have an accommodation portion 321 having a plate shape accommodating the plurality of battery modules 200, 201, 202, 203, 204, 205, 206 and extending in the horizontal direction with respect to the ground, and an extending portion 323 bent from both front and rear ends of the accommodation portion 321 to extend downward.

Further, the second frame 320 may be coupled to a lower portion of the first frame 310. Specifically, an outer lower surface of the accommodation portion 311 of the first frame 310 and an outer upper surface of the accommodation portion 311 of the second frame 320 may be coupled to each other. In this case, the first frame 310 and the second frame 320 may be coupled to each other by welding. That is, the mounting structure 300 may have an 'H' shape as a whole as the first frame 310 and the second frame 320 are coupled.

For example, the first frame 310 and the second frame 320 of the mounting structure 300 may be made of steel, aluminum alloy, copper alloy, or stainless steel. In addition, the components of the mounting structure 300 may be coated with an electrically insulating material.

For example, as shown in FIG. 2, the first frame 310 and the second frame 320 may be located such that the outer lower surface of the accommodation portion 311 of the first frame 310 and the outer upper surface of the accommodation portion 321 of the second frame 320 correspond to each other in the upper and lower direction. In addition, the outer lower surface of the accommodation portion 311 of the first frame 310 and the outer upper surface of the accommodation portion 321 of the second frame 320 may be coupled to each other.

Thus, according to the present disclosure, the mounting structure 300 of the present disclosure is configured by coupling the first frame 310 and the second frame 320 separated from each other. Thus, different from an 'H'-shaped structure configured integrally, the mounting structure 300 may be simply manufactured by a small manufacturing facility, which greatly reduces the manufacturing cost.

In addition, the plurality of battery modules 207, 208, 209, 210, 211, 212, 213 of the first battery module group 200G1 is accommodated in the inner space of the first frame 310. Specifically, the bottom end of the module housings 210 of the plurality of battery modules 207, 208, 209, 210, 211, 212, 213 of the first battery module group 200G1 may be disposed to contact the bottom surface 311a of the inner space of the first frame 310.

In addition, a portion of the bottom end of the module housing 210 may have a structure protruding downward by a predetermined distance from the connection plate 220 such that the connection plate 220 of the battery module does not directly contact the bottom surface 311a of the inner space of the first frame 310.

Moreover, the plurality of battery modules 200, 201, 202, 203, 204, 205, 206 of the second battery module group 200G2 is accommodated in the inner space of the second frame 320. Specifically, the top end of the module housings 210 of the plurality of battery modules 200, 201, 202, 203, 204, 205, 206 of the second battery module group 200G2 may be disposed to contact the ceiling surface 321a of the inner space of the second frame 320.

In addition, the top end of the module housing 210 of the second battery module group 200G2 may have a structure 217 protruding upward by a predetermined distance from the connection plate 220 so as not to directly contact the ceiling surface 321a of the inner space of the second frame 320.

Meanwhile, referring to FIGS. 3 to 5 along with FIG. 2, when viewed in the F direction, the module housing 210 may include a fixing tube 212 having a hollow structure H5 perforated in the upper and lower direction. Specifically, the fixing tube 212 may be located at left and right outer sides, respectively. For example, as shown in FIG. 3, the fixing tube 212 may be located at a left rear end of the module housing 210. In addition, another fixing tube 212 may be located at a right rear end of the module housing 210.

Meanwhile, referring to FIGS. 3 and 4 again, upper and lower terminal portions of the fixing tube 212 may extend to protrude in the upper and lower direction further to than the remaining portion of the top surface or the bottom surface of the module housing 210. Specifically, the upper terminal portion of the fixing tube 212 may have a structure that protrudes upward further to the remaining portion of the top surface of the module housing 210 other than the fixing tube 212. In addition, the lower terminal portion of the fixing tube 212 may have a structure 218 that protrudes downward further to the remaining portion of the bottom surface of the module housing 210 other than the fixing tube 212.

In addition, referring to FIG. 5, the body part 225 may have a guide hole H2 perforated in the upper and lower direction so that the terminal portion of the fixing tube 212 protruding in the upper and lower direction is inserted therein.

For example, as shown in FIG. 5, two guide holes H2 may be formed in the body part 225 of the first connection plate 221. In addition, the upper terminal portions of the fixing tubes 212 may be inserted into the two guide holes H2, respectively.

Moreover, for example, as shown in FIG. 5, two guide holes H2 may be formed in the body part 225 of the second connection plate 222. In addition, the lower terminal portions of the fixing tubes 212 may be inserted into the two guide holes H2, respectively.

Thus, according to this configuration of the present disclosure, since the guide hole H2 perforated in the upper and lower direction is formed in the body part 225 so that the terminal portion of the fixing tube 212 protruding in the upper and lower direction is inserted therein, the first connection plate 221 and the second connection plate 222 may be guided to be mounted in place at the upper portion or the lower portion of the module housing 210. Accordingly, the connection terminals 225c of the first connection plate 221 and the second connection plate 222 may be disposed at locations corresponding to the electrode terminals 111 of the plurality of cylindrical battery cells 100, thereby increasing manufacturing efficiency and product maturity more effectively.

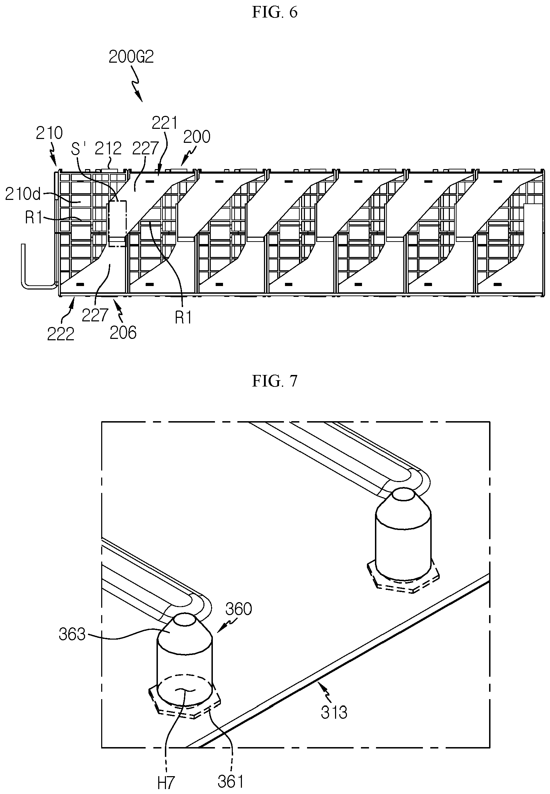

FIG. 6 is a side view schematically showing the battery pack according to an embodiment of the present disclosure.

Referring to FIG. 6 along with FIG. 5, a portion (a welding portion) of the connection part 227 may be located to face left and right outer sides of the fixing tube 212 located at the outer sidewall 210d. Specifically, the fixing tube 212 of the module housing 210 has a hollow structure H5. In addition, the fixing tube 212 may be formed adjacent to the left and right outer sidewalls 210c, 210d of the module housing 210.

Thus, according to this configuration of the present disclosure, as the overlapped portion S' of the connection parts 227 of the first connection plate 221 and the second connection plate 222 is located to face the left outer side or the right outer side of the fixing tube 212, the cylindrical battery cell 100 accommodated in the battery module 206 may be spaced apart from the welding location of the overlapped portion S' by a predetermined distance. Accordingly, the amount of heat generated during the welding process of the connection part 227 may be transferred to the cylindrical battery cell 100 of the battery module 200 to the minimum, thereby preventing the performance degradation of the cylindrical battery cell 100 caused by the welding heat and thus effectively reducing the defective rate.

FIG. 7 is an enlarged perspective view schematically showing a region A of some components of the battery pack of FIG. 2.

Referring to FIG. 7 along with FIG. 2 again, an insert portion 315 may be formed in the bottom surface 311a of the inner space of the first frame 310. Specifically, the insert portion 315 may have a fixing member 360 protrusively extending upward so as to be inserted into the hollow structure H5 of the fixing tube 212 of the first battery module group 200G1.

For example, the fixing member 360 of the insert portion 315 may have a press-in nut 361 inserted into a fixing opening H7 perforated in the bottom surface 311a of the inner space of the first frame 310 and a horn-shape bolt 363 coupled to the press-in nut 361.

For example, as shown in FIG. 2, fourteen insert portions 315 may be formed at the bottom surface 311a of the inner space of the first frame 310. In addition, the fixing member 360 of the insert portion 315 may have a cylindrical body extending upward from the bottom surface 311a of the first frame 310 and a top end with a horn shape having a diameter continuously reduced upward.

In addition, an insert portion 325 may be formed at the ceiling surface 321a of the inner space of the second frame 320. Specifically, the fixing member of the insert portion 325 may protrusively extend downward so as to be inserted into the hollow structure H5 of the fixing tube 212 of the second battery module group 200G2. For example, similar to the insert portion 315 provided at the first frame 310, the fixing member of the insert portion 325 may include a press-in nut 361 inserted in the perforated fixing opening H7 and a horn-shaped bolt 363 coupled to the press-in nut 361 as shown in FIG. 7, at the ceiling surface 321a of the inner space of the second frame 320.

For example, as shown in FIG. 2, fourteen insert portions 325 may be formed at the ceiling surface 321a of the inner space of the second frame 320. In addition, the fixing member of the insert portion 325 may have a cylindrical body extending downward from the ceiling surface 321a of the second frame 320 and a bottom end with a horn shape having a diameter continuously reduced upward.

Thus, according to this configuration of the present disclosure, since the insert portions 315, 325 are formed at the first frame 310 and the second frame 320, respectively, the plurality of battery modules 200, 201, 202, 203, 204, 205, 206, 207, 208, 209, 210, 211, 212, 213 provided to the first battery module group 200G1 and the second battery module group 200G2 may be effectively fixed without movement.

Further, in case of a conventional mounting structure (not shown), when a plurality of battery modules (not shown) stacked in two layers are mounted, long bolts elongated in the upper and lower direction and bushings respectively provided to the plurality of battery modules are required in order to fix the plurality of battery modules to the mounting structure. In addition, in the conventional technique, a process of inserting and fixing the long bolts and the bushings into the plurality of battery modules, respectively, in a state where the plurality of battery modules are mounted to the mounting structure 300 is performed, and this process requires a precise work, which consumes much manufacturing tome.

Moreover, providing the long bolts and the bushings requires a large material cost and serves as a major cause of increasing the weight of the battery pack. Meanwhile, in the present disclosure, in place of the plurality of long bolts and bushings, the insert portions 315 are applied to the first frame 310 and the second frame 320. In this case, the plurality of battery modules 200, 201, 202, 203, 204, 205, 206, 207, 208, 209, 210, 211, 212, 213 may be fixed simultaneously with being mounted to the mounting structure 300, thereby reducing manufacturing time, avoiding large material costs and effectively reducing the weight of the battery pack 1000.

Further, a beading structure 310b ridged in the front and rear direction may be formed at the bent portions 313 (the connection parts) of the first frame 310. For example, as shown in FIG. 2, the beading structure 310b ridged in a rearward direction (an inward direction) may be formed at the bent portion 313 (the extending portion) located at the front of the first frame 310.

Also, a beading structure 320b ridged in the front and rear direction may be formed at the bent portions 323 of the second frame 320. For example, as shown in FIG. 2, the beading structure 320b ridged in a rearward direction (an inward direction) may be formed at the bent portion 323 (the extending portion) located at the front of the second frame 320.

In addition, an inner side surface of the beading structure 310b of the first frame 310 may be configured to face or contact the front outer side of the first battery module group 200G1. Further, an inner side surface of the beading structure 320b of the second frame 320 may be configured to face or contact the front outer side of the second battery module group 200G2.

Also, beading structures 310b1, 320b2 ridged in an upper direction or a lower direction may be formed at the bottom surface 311a of the inner space of the first frame 310 and the ceiling surface 321a of the inner space of the second frame 320. For example, as shown in FIG. 2, the beading structure 310b2 ridged upward may be formed at the bottom surface 311a of the inner space of the first frame 310. Further, the beading structure 320b2 ridged downward may be formed at the ceiling surface 321a of the inner space of the second frame 320.

Thus, according to this configuration of the present disclosure, since the beading structures 310b, 320b are formed at the first frame 310 and the second frame 320, the mechanical rigidity of the first frame 310 and the second frame 320 may be enhanced. Further, since the beading structures 310b, 320b formed at the extending portions 313, 323 of the first frame 310 and the second frame 320 may serve to absorb (buffer) the impact force caused by the movement in the front and rear direction of the first battery module group 200G1 and the second battery module group 200G2 accommodated in the first frame 310 and the second frame 320, it is possible to improve the stability and durability of the in plurality of accommodated cylindrical battery cells 100.

Referring to FIG. 1 again, electric components 401, 403 may be mounted to an outer side of the bent portions of the first frame 310 and the second frame 320. Specifically, the electric components 401, 403 may be configured to sense a current of the first battery module group 200G1 and the second battery module group 200G2 or control an operation thereof.

For example, the battery pack 1000 may include a plurality of electric components (not shown) along with the plurality of battery modules 200, 201, 202, 203, 204, 205, 206. Also, the electric components 401, 403 are also referred to as electrical equipment. Further, representative examples of the electrical equipment included in the battery pack 1000 may be a relay 403, a current sensor, a fuse, a battery management system (BMS) 401, and the like. The electrical equipment refer to components for managing charge and discharge of the cylindrical battery cell 100 included in the battery pack 1000 and ensuring safety and may be regarded as essential components included in most battery packs 1000.

Thus, according to this configuration of the present disclosure, since the electric components 401, 403 are mounted on the outer side of the bent portions of the first frame 310 and the second frame 320, it is possible to avoid the influence of electromagnetic wave or magnetic field generated from the plurality of battery modules 200 mounted to the mounting structure 300, thereby preventing a malfunction or signal noise. That is, the first frame 310 and the second frame 320 may be made of a metal capable of blocking an electromagnetic wave or magnetic field, thereby exhibiting this effect.

For example, as shown in FIG. 1, when viewed in the F direction, the electrical equipment may be mounted to the outer side of the bent portion 313 (the extending portion) at the front of the first frame 310 and the second frame 320. Moreover, the electrical equipment may include a BMS and a relay. In addition, the BMS 401 and the relay 403 may be electrically connected to electric component bus bars 290a, 290b provided to the first battery module group 200G1 and the second battery module group 200G2, respectively.

Further, referring to FIG. 2, open regions O1, O2 may be formed at the bent portions 313, 323 at the front side of the first frame 310 and the second frame 320 so that the electric component bus bars 290a, 290b protrusively extend to the outside, respectively. In addition, the electric component bus bar 290a may be configured to make an electrical connection between the connection plate 220 and the electric components 401, 403.

For example, as shown in FIG. 2, the electric component bus bar 290a of the first battery module group 200G1 may be configured to be electrically connected to the connection plate 220a provided at the top end of the battery module 207. To this end, the connection plate 220a may have a structure 220b that is bent from a front end of the body part 225a to extend downward. In addition, an inner side surface of the bent and extended structure 220b of the connection plate 220 may be configured to contact a portion of the electric component bus bar 290a.

Similarly, for example, as shown in FIG. 2, the electric component bus bar 290a of the second battery module group 200G2 may be configured to be electrically connected to the connection plate 220 provided at the top end of the battery module 206. To this end, the connection plate 220 may have a structure 220b bent from the front end of the body part 225a to extend downward. Moreover, an inner side surface of the bent and extended structure 220b of the connection plate 220 may be configured to contact a portion of the electric component bus bar 290b.

Further, the electric component bus bar 290 may be bent forward and then the bent end may be bent again upward or downward. For example, the provided electric component bus bar 290a provided to the first battery module group 200G1 may be bent forward, and the bent end may be bent again downward and then bent forward again. In addition, a front end of the electric component bus bar 290a may be configured to protrusively extend outward through the open region O1 formed in the bent portion 313 at the front of the first frame 310.

In addition, the electric component bus bar 290b provided to the second battery module group 200G2 may be bent forward, and the bent end may be bent again upward. Moreover, an inner side surface of the bent and extended structure 220b of the connection plate 220 may be configured to contact a portion of the electric component bus bar 290b. In addition, a front end of the electric component bus bar 290b may be configured to protrusively extend outward through the open region O2 formed in the bent portion 323 at the front of the second frame 320.

Thus, according to this configuration of the present disclosure, since the open regions 01, 02 respectively formed in the first frame 310 and the second frame 320 may be connected to the electric components using the electric component bus bar 290 in a short length, it is possible to simplify the installation of the battery pack 1000, reduce the manufacturing cost and increase the space efficiency of the product.

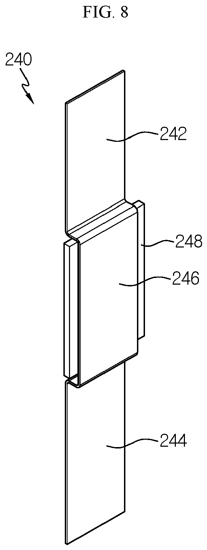

FIG. 8 is a perspective view schematically showing a connection bus bar, employed to a battery pack according to another embodiment of the present disclosure.

Referring to FIG. 8 along with FIG. 1, the battery pack 1000 may further include a connection bus bar 240 having an electric conductive material configured to electrically connect the first battery module group 200G1 and the second battery module group 200G2. Specifically, the connection bus bar 240 may include an electric conductive material. For example, the electric conductive material may be a metal alloy mainly having copper, nickel, aluminum, gold, silver, or the like.

More specifically, the connection bus bar 240 may include a first access portion 242, a second access portion 244, and a detouring portion 246. More specifically, the first access portion 242 may have a plate elongated upward and configured to contact the first connection plate 221 or the second connection plate 222 provided to the first battery module group 200G1. In addition, the second access portion 244 may have a plate elongated downward to contact the first connection plate 221 or the second connection plate 222 provided to the second battery module group 200G2.

Moreover, the detouring portion 246 may be configured such that both ends thereof are connected with the first access portion 242 and the second access portion 244, respectively. In addition, the detouring portion 246 may have a plate that is stepped outward from the first access portion 242 and the second access portion 244.

Further, the connection bus bar 240 may include an insulation cover 248. Specifically, the insulation cover 248 may be located to face an inner side surface of the detouring portion 246. Moreover, the insulation cover 248 may be located such that the detouring portion 246 is not in contact with the first frame 310 and the second frame 320. In addition, the insulation cover 248 may include an electrically insulating material. For example, the insulating material may be a plastic material or rubber with very low electrical conductivity.

For example, as shown in FIG. 1, one connection bus bar 240 may be provided to electrically connect two second connection plates 222 respectively provided to the battery modules 200, 201, 202, 203, 204, 205, 206 included in the second battery module group 200G2 of the battery pack 1000 and the battery modules 207, 208, 209, 210, 211, 212, 213 included in the first battery module group 200G1 to each other.

In addition, referring to FIGS. 1 and 2, the connection bus bar 240 may include a first access portion 242 configured to contact the second connection plate 222 provided to the battery module 205 of the second battery module group 200G2 and a second access portion 244 configured to contact the second connection plate 222 provided to the battery module 207 of the first battery module group 200G1. Also, the connection bus bar 240 may include a detouring portion 246 configured to connect the first access portion 242 and the second access portion 244 to each other and stepped outward from the first access portion 242 and the second access portion 244.

Thus, according to this configuration of the present disclosure, since the battery pack 1000 includes the connection bus bar 240 having the first access portion 242, the second access portion 244, the detouring portion 246 and the insulation cover 248, the plurality of battery modules 207, 208, 209, 210, 211, 212, 213 of the first battery module group 200G1 and the plurality of battery modules 200, 201, 202, 203, 204, 205, 206 of the second battery module group 200G2 may be electrically connected without a short phenomenon, thereby increasing the safety of the battery pack 1000.

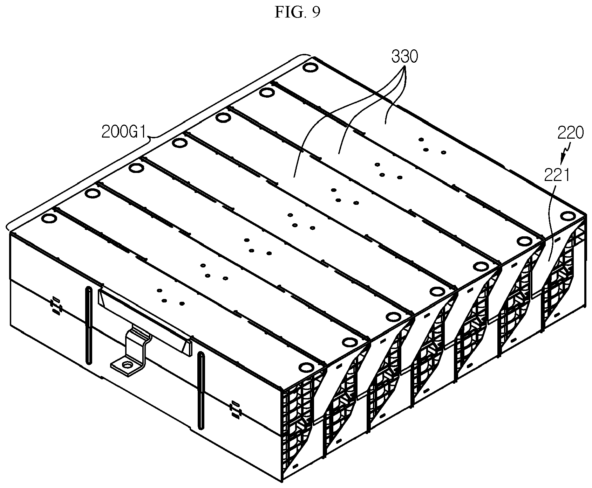

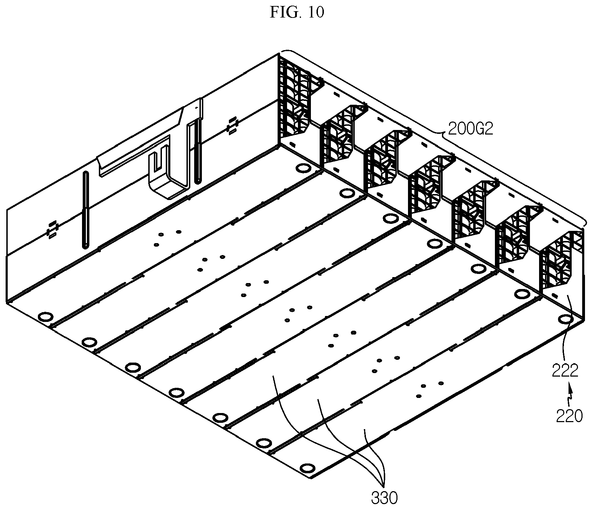

FIG. 9 is a perspective view schematically showing some components of the battery pack according to another embodiment of the present disclosure. Also, FIG. 10 is a bottom perspective view schematically showing some components of the battery pack according to another embodiment of the present disclosure.

Referring to FIGS. 9 and 10 along with FIG. 2, a thermal conductive pad 330 may be added to at least a portion of the outer side surface of the connection plate 220. Specifically, the thermal conductive pad 330 may include a polymer resin with high thermal conductivity, a silicone-based resin or a filler. For example, the polymer resin may be a polysiloxane resin, a polyamide resin, a urethane resin, or an epoxy-based resin. In addition, the thermal conductive pad 330 may be in a form in which the added adhesive material is solidified. For example, the adhesive material may be a material such as acryl-based, polyester-based, polyurethane-based or rubber-based materials. In addition, a portion of the thermal conductive pad 330 may contact the first frame 310 and the second frame 320.

For example, as shown in FIG. 9, the thermal conductive pad 330 may be added to an upper portion of the first battery module group 200G1 to cover the entire upper surface of the connection plate 221. Moreover, as shown in FIG. 10, the thermal conductive pad 330 may be added to a lower portion of the second battery module group 200G2 to cover the entire lower surface of the connection plate 222.

Thus, according to this configuration of the present disclosure, since the thermal conductive pad 330 is added to the connection plate 220, the thermal conductive pad 330 may absorb the heat accumulated in the connection plate 220 and effectively release it to the outside, thereby improving the cooling efficiency of the battery pack 1000. Further, since a portion of the thermal conductive pad 330 is configured to contact the first frame 310 and the second frame 320, the thermal conductivity may be maximized.

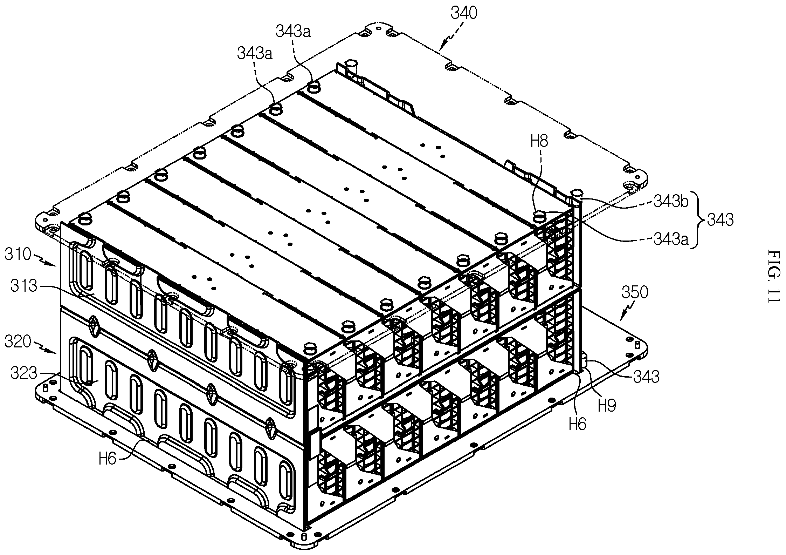

FIG. 11 is a perspective view schematically showing a battery pack according to still another embodiment of the present disclosure. For reference, in FIG. 11, the upper plate 340 is depicted transparently so that its inside may be seen from the outside for convenience of description.

Referring to FIG. 11, the mounting structure 300 may include an upper plate 340, a lower plate 350, and a plurality of second insert portions 343.

Specifically, the upper plate 340 may be located to cover an upper portion of the first frame 310. In addition, the upper plate 340 may be located above the first frame 310. Also, the upper plate 340 may be configured to cover the top end of the first battery module group 200G1 and the upwardly bent portions 313 (the extending portions) of both ends of the first frame 310.

For example, as shown in FIG. 11, the upper plate 340 may be located to cover the upper portion of the first frame 310. Further, the upper plate 340 may have an outer circumference protrusively extending in the horizontal direction further to the first frame 310.

Further, the lower plate 350 may be located to support the lower portion of the second frame 320 upward. Specifically, the lower plate 350 may be located below the second frame 320. In addition, the lower plate 350 may be configured to support the bottom end of the second battery module group 200G2 and the downwardly bent portions 321 (the extending portions) of both ends of the second frame 320 upward.

For example, as shown in FIG. 11, the lower plate 350 may be located below the second frame 320. In addition, the lower plate 350 may be configured to support the lower portion of the downwardly bent portion 323 of the second frame 320 and the second battery module group 200G2 upward. Moreover, the lower plate 350 may have an outer circumference protrusively extending in the horizontal direction further to the second frame 320. In addition, the lower plate 350 may have an outer circumference protrusively extending in the horizontal direction further to the second frame 320.

Thus, according to this configuration of the present disclosure, since the mounting structure 300 further includes the upper plate 340 and the lower plate 350, it is possible to transfer the heat accumulated in the first frame 310, the second frame 320, the first battery module group 200G1 and the second battery module group 200G2 to the outside. That is, since the upper plate 340 and the lower plate 350 are configured to contact a part of the first frame 310, the second frame 320, the first battery module group 200G1 and the second battery module group 200G2, the heat transfer efficiency is maximized, thereby effectively increasing the heat dissipation effect of the battery pack 1000.

In addition, the upper plate 340 may have a fixing groove (not shown) dented upward so that the bent end of the upwardly bent portion 313 of both ends of the first frame 310 is inserted therein. Further, the lower plate 350 may have a fixing groove H6 dented downward so that the bent end of the downwardly bent portion 323 of both ends of the second frame 320 is inserted therein.

For example, as shown in FIG. 11, two fixing grooves H6 dented downward may be formed at the upper surface of the lower plate 350 so that the ends of the downwardly bent portions 323 of both ends of the second frame 320 are inserted therein, respectively. Though not shown in FIG. 11, two fixing grooves dented upward may be formed at the lower surface of the upper plate 340 so that the ends of the upwardly bent portions 313 of both ends of the first frame 310 are inserted therein, respectively.

Thus, according to this configuration of the present disclosure, since the upper plate 340 and the lower plate 350 respectively have the fixing groove H6 for fixing the first frame 310 and the second frame 320, it is possible to effectively prevent the first frame 310 and the second frame 320 from moving due to an external impact while the battery pack 1000 is in use, thereby improving durability and safety of the battery pack 1000.

Meanwhile, referring to FIG. 11 along with FIG. 5, the second insert portion 343 may be provided to the upper plate 340 in the form of protrusively extending inward such that the upper plate 340 is fixed to the first battery module group 200G1 and the first frame 310. For example, as shown in FIG. 11, the second insert portion 343a may be inserted into an opening H8 formed in the upper plate 340 downward. In addition, the second insert portion 343a may have a press-in nut (having a structure similar to the press-in nut 361 of FIG. 7) having a greater diameter than the opening H8 so as not to entirely pass through the opening H8 formed in the upper plate 340.

Further, the second insert portion 343a may be formed in the form of protrusively extending inward so as to be inserted into the fixing tube 212 (FIG. 3) formed at the module housing 210 of the battery module 200. In addition, another second insert portion 343b may be formed such that both ends of the first frame 310 press the outer side surface of the bent portion 313 inward. For example, the second insert portion 343b may be configured such that the press-in nut 361 (FIG. 7) is inserted into the fixing opening H8 perforated in the upper plate 340 and a horn-shaped bolt 363 (FIG. 7) is coupled to the press-in nut.

For example, as shown in FIG. 11, sixteen second insert portions 343 may be formed at the upper plate 340. Moreover, among the sixteen second insert portions 343, fourteen insert portions 343a may be inserted into the fixing tubes 212 (FIG. 3) of the plurality of battery modules 207, 208, 209, 210, 211, 212, 213, respectively. In addition, the remaining two second insert portions 343b may be formed such that both ends of the first frame 310 press the bent portion 313 inward.

Moreover, the second insert portion 343 may be provided to the lower plate 350 such that the lower plate 350 is fixed to the second battery module group 200G2 and the second frame 320. For example, the second insert portion 343 may be inserted into an opening H9 formed in the lower plate 350 upward from the outside. In addition, the second insert portion 343 may have a press-in nut (having a structure similar to the press-in nut 361 of FIG. 7) having a greater diameter than the opening H9 so as not to entirely pass through the opening H9 formed in the lower plate 350.

Further, the second insert portion 343 of the lower plate 340 may be formed to be inserted into the fixing tube 212 formed at the lower portion of the module housing 210 of the battery module 200 (FIG. 3). In addition, the second insert portion 343 may be formed such that both ends of the second frame 310 press the outer side surface of the bent portion 323 inward. For example, the second insert portion 343 may be configured such that the press-in nut 361 is inserted into the fixing opening H9 perforated in the lower plate 350 and a horn-shaped bolt 363 (FIG. 7) is coupled to the press-in nut 361.

For example, though the second insert portion 343 is not visible in FIG. 11, similar to the second insert portion 343 formed at the upper plate 340, sixteen second insert portions 343 may be formed at the lower plate 350. In addition, among the sixteen second insert portions 343, fourteen second insert portions may be inserted into the lower ends of the fixing tubes 212 (FIG. 3) of the module housings 210 (FIG. 3) of the plurality of battery modules 200, 201, 202, 203, 204, 205, 206 of the second battery module group 200G2. Further, the remaining two second insert portions 343 may be formed such that both ends of the second frame 320 press the bent portion 323 inward.

In addition, an electronic device according to the present disclosure may include the battery pack 1000. Moreover, the electronic device (not shown) may have a case (not shown) for accommodating the battery pack 1000 therein.

Moreover, a vehicle (not shown) according to the present disclosure may include the battery pack 1000. Further, the vehicle may be an electric vehicle having an electric motor (not shown), for example, powered by the battery pack 1000.

**Reference Signs**

| | | | |
|---|---|---|---|
| 1000: | battery pack | 100: | cylindrical battery cell |
| 300: | mounting structure | 310, 320: | first frame, second frame |
| 315, 325: | insert portion | | |
| 200G1, 200G2: | first battery module group, second battery module group | | |
| 200, 201, 202, 203, 204, 205, 206, 207, 208, 209, 210, 211, 212, 213: | battery module | | |
| 111, 111a, 111b: | electrode terminal, first electrode terminal, second electrode terminal | | |
| 220, 221, 222: | connection plate, first connection plate, second connection plate | | |
| 225: | body part | 227: | connection part |
| 210: | module housing | 210a, 210b, 210c, 210d: | outer sidewall |

| | | | |
|---|---|---|---|
| 221b: | expanding structure | 212: | fixing tube |
| H1: | hollow | H2: | guide hole |
| 240: | connection bus bar | | |
| 242, 244, 246: | first access portion, second access portion, detouring portion | | |
| H3: | access opening | 248: | insulation cover |
| 225c: | connection terminal | 213, 215: | coupling protrusion, guide groove |
| 310b, 320b: | beading structure | 401, 403: | electric components |
| 290a, 290b: | electric component bus bar | 330: | thermal conductive pad |
| 340, 350: | upper plate, lower plate | | |
| 343, 353: | second insert portion | 361, 363: | press-in nut, bolt |

### INDUSTRIAL APPLICABILITY

The present disclosure relates to a battery pack including a plurality of battery modules. In addition, the present disclosure is available for industries associated with electronic devices or vehicles including the battery pack.

## Claims

1. A battery pack, comprising:
- a mounting structure (300) including a first frame (310) formed in a plate shape whose both ends are bent upward to form an inner space and a second frame (320) formed in a plate shape whose both ends are bent downward to form an inner space, wherein the mounting frame (300) is configured by coupling the first frame (310) and the second frame (320) separated from each other;
- a first battery module group (200G1) accommodated in the inner space of the first frame (310) and including a plurality of battery modules (200, 201, 202, 203, 204, 205, 206) arranged in a front and rear direction; and a second battery module group (200G2) accommodated in the inner space of the second frame and including a plurality of battery modules (207, 208, 209, 210, 211, 212, 213) arranged in a front and rear direction,
wherein each battery module includes:
a plurality of cylindrical battery cells (100) standing up in an upper and lower direction having electrode terminals (111) respectively formed at upper and lower portions thereof and arranged in a horizontal direction;
a module housing (210) comprising an upper case (210A) and a lower case (210B), wherein the upper case (210A) have a hollow (H1) formed to surround an upper outer surface of the cylindrical battery cell (100) and the lower case (210B) is fastened to a lower portion of the upper case (210A), and the lower case (210B) have a hollow H1 formed to surround a lower outer surface of the cylindrical battery cell (100), such that the cylindrical battery cells (100) are inserted and accommodated therein; and
two connection plates (221, 222) respectively located at the upper and the lower portion of the plurality of cylindrical battery cells (100),
wherein the two connection plates (221, 222) include a plurality of connection terminals (225c) disposed at locations corresponding to the electrode terminals (111) of the plurality of battery cells (100), and
wherein the first connection plate (221) includes a body part (225) located at the upper portion of the plurality of cylindrical battery cells and a connection part (227) protrusively extending from the body part (225) bent downward, and the second connection plate includes a body part (225) located at the lower portion of the plurality of cylindrical battery cells and a connection part (227) protrusively extending from the body part (225) bent upward, wherein the bent end of the connection part (227) are configured to contact a portion of another connection plate, wherein the connection part (227) of the first connection plate (221) has an expanding structure (221b) to protrusively extend forward further to a foremost terminal portion of the module housing (210) and the connection part (227) of the second connection plate (222) has an expanding structure (not shown) to protrusively extend rearward further to a rearmost terminal portion of the module housing (210), and wherein the connection part (227) of the first connection plate (221) is provided to electrically contact a connection part (227) of a second connection plate (222) provided to another battery module.

2. The battery pack according to claim 1,
wherein the module housing (210) includes a fixing tube (212) located at an outer side in a left and right direction and having a hollow structure perforated in an upper and lower direction so that a terminal portion of the hollow structure protrusively extends in the upper and lower direction further to the other portion of an upper surface or a lower surface of the module housing.

3. The battery pack according to claim 2,
wherein a guide hole (H2) perforated in the upper and lower direction is formed in the body part (225) so that the terminal portion of the fixing tube (212) protruding in the upper and lower direction is inserted therein.

4. The battery pack according to claim 2,
wherein the connection part (227) is located to face left and right outer sides of the fixing tube (212).

5. The battery pack according to claim 2,
wherein an insert portion (315) protrusively extending upward is formed at a bottom surface of the inner space of the first frame (310) so as to be inserted into the hollow structure (H5) of the fixing tube (212) of the first battery module group (200G1), and
wherein an insert portion (315) protrusively extending downward is formed at a ceiling surface (321a) of the inner space of the second frame (320) so as to be inserted into the hollow structure (H5) of the fixing tube (212) of the second battery module group (200G2).

6. The battery pack according to claim 1,
wherein a beading structure (310b, 320b) ridged in an upper and lower direction or in a front and rear direction is formed on at least one of the bent portions of the first frame and the second frame (310, 320), a bottom surface of the inner space of the first frame, and a ceiling surface of the inner space of the second frame.

7. The battery pack according to claim 1,
wherein electric components configured to detect currents of the first battery module group (200G1) and the second battery module group (200G2) or control operations thereof are mounted to an outer side of the bent portions of the first frame and the second frame.

8. The battery pack according to claim 7,
wherein an open region (O1, 02) is formed at the bent portion of each of the first frame and the second frame so that an electric component bus bar configured to electrically connect the connection plate and the electric components to each other protrusively extends out therethrough.

9. The battery pack according to claim 1, further comprising:
a connection bus bar (240) having an electric conductive material and configured to electrically connect the first battery module group (200G1) and the second battery module group (200G2),
wherein the connection bus bar (240) includes a first access portion (242) configured to contact the connection plate (221) of the first battery module group (200G1), a second access portion (244) configured to contact the connection plate (222) of the second battery module group (200G2), and a detouring portion (246) having both ends respectively connected to the first access portion and the second access portion and stepped from the first access portion and the second access portion to the outside.

10. The battery pack according to claim 1,
wherein a thermal conductive pad (330) is added to at least a portion of an outer side surface of the connection plate.

11. The battery pack according to claim 1,
wherein the mounting structure (300) further includes:
an upper plate (340) located to cover an upper portion of the first frame (310); and
a lower plate (350) located to support a lower portion of the second frame upward (320),
wherein a second insert portion (343a) protrusively extending inward is formed at the upper plate (340) or the lower plate (350).

12. An electronic device, comprising the battery pack according to any one of claims 1 to 11.

## Patentansprüche

1. Batteriepack, umfassend
- eine Anbringungsstruktur (300), die einen ersten Rahmen (310), der in einer Plattenform geformt ist, dessen beiden Enden nach oben gebogen sind, um einen inneren Raum zu formen, und einen zweiten Rahmen (320) umfasst, der in einer Plattenform geformt ist, dessen beiden Enden nach unten gebogen sind, um einen inneren Raum zu formen, wobei der Anbringungsrahmen (300) durch Koppeln des ersten Rahmens (310) und des zweiten Rahmens (320) voneinander getrennt eingerichtet ist;
- eine erste Batteriemodulgruppe (200G1), die in dem inneren Raum des ersten Rahmens (310) untergebracht ist und eine Mehrzahl von Batteriemodulen (200, 201, 202, 203, 204, 205, 206) umfasst, die in einer Vorne- und Hinten-Richtung arrangiert sind; und eine zweite Batteriemodulgruppe (200G2), die in dem inneren Raum des zweiten Rahmens untergebracht ist und eine Mehrzahl von Batteriemodulen (207, 208, 209, 210, 211, 212, 213) umfasst, die in einer Vorne- und Hinten-Richtung arrangiert sind,
wobei jedes Batteriemodul umfasst:
eine Mehrzahl von zylindrischen Batteriezellen (100), die in einer Oben- und Unten-Richtung stehen, die Elektrodenanschlüsse (111) aufweisen, die an oberen beziehungsweise unteren Abschnitten davon geformt sind und in einer horizontalen Richtung arrangiert sind;
ein Modulgehäuse (210), das eine obere Hülle (210A) und eine untere Hülle (210B) umfasst, wobei die obere Hülle (210A) einen Hohlraum (H1) aufweist, der geformt ist, um eine obere äußere Fläche der zylindrischen Batteriezelle (100) zu umgeben und die untere Hülle (210B) an einem unteren Abschnitt der oberen Hülle (210A) befestigt ist, und die untere Hülle (210B) einen Hohlraum H1 aufweist, der geformt ist, um eine untere äußere Fläche der zylindrischen Batteriezelle (100) zu umgeben, so dass die zylindrischen Batteriezellen (100) eingefügt sind und darin aufgenommen sind; und
zwei Verbindungsplatten (221, 222), die an dem oberen beziehungsweise dem unteren Abschnitt der Mehrzahl von zylindrischen Batteriezellen (100) angeordnet ist, wobei die beiden Verbindungsplatten (221, 222) eine Mehrzahl von Verbindungsanschlüssen (225c) umfassen, die an Stellen, die den Elektrodenanschlüssen (111) der Mehrzahl von Batteriezellen (100) entsprechen, vorgesehen sind, und
wobei die erste Verbindungsplatte (221) ein Körperteil (225), der an dem oberen Abschnitt der Mehrzahl von zylindrischen Batteriezellen angeordnet ist und ein Verbindungsteil (227) umfasst, der sich von dem nach unten gebogenen Körperteil (225) hervorstehend erstreckt, und die zweite Verbindungspatte ein Körperteil (225), der an dem unteren Abschnitt der Mehrzahl von zylindrischen Batteriezellen angeordnet ist und ein Verbindungsteil (227) umfasst, der sich von dem nach unten gebogenen Körperteil (225) hervorstehend erstreckt, wobei das gebogenen Ende des Verbindungsteils (227) dazu eingerichtet ist, einen Abschnitt einer anderen Verbindungsplatte zu kontaktieren, wobei der Verbindungsteil (227) der ersten Verbindungsplatte (221) eine Erweiterungsstruktur (221b) aufweist, um sich weiter nach vorne hervorstehend zu einem vordersten Anschlussabschnitt des Modulgehäuses (210) zu erstrecken und der Verbindungsteil (227) der zweiten Verbindungsplatte (222) eine Erweiterungsstruktur (nicht gezeigt) aufweist, um sich weiter nach hinten hervorstehend zu einem hintersten Anschlussabschnitt des Modulgehäuses (210) zu erstrecken, und wobei der Verbindungsteil (227) der ersten Verbindungsplatte (221) vorgesehen ist, um ein Verbindungsteil (227) einer zweiten Verbindungsplatte (222), die an einem anderem Batteriemodul vorgesehen ist, elektrisch zu kontaktieren.

2. Batteriepack nach Anspruch 1,
wobei das Modulgehäuse (210) ein Befestigungsrohr (212) umfasst, das an einer äußeren Seite in einer Links- und Rechts-Richtung angeordnet ist und eine Hohlstruktur aufweist, die in einer Oben- und Unten-Richtung perforiert ist, so dass ein Anschlussabschnitt der Hohlstruktur sich hervorstehend in der Oben- und Unten-Richtung weiter zu dem anderen Abschnitt einer oberen Fläche oder einer unteren Fläche des Modulgehäuses erstreckt.

3. Batteriepack nach Anspruch 2,
wobei ein Führungsloch (H2) in dem Körperteil (225), das in der Oben- und Unten-Richtung perforiert ist, geformt ist, so dass der Anschlussabschnitt des in der Oben- und Unten-Richtung hervorstehenden Befestigungsrohrs (212) darin eingeführt ist.

4. Batteriepack nach Anspruch 2,
wobei der Verbindungsteil (227) angeordnet ist, so dass er linken und rechten äußeren Seiten des Befestigungsrohrs (212) gegenüberliegt.

5. Batteriepack nach Anspruch 2,
wobei ein sich nach oben hervorstehend erstreckender Einfügeabschnitt (315) an einer Bodenfläche des inneren Raums des ersten Rahmens (310) geformt ist, so dass er in die Hohlstruktur (H5) des Befestigungsrohrs (212) der ersten Batteriemodulgruppe (200G1) eingeführt ist, und
wobei ein sich nach unten hervorstehend erstreckender Einfügeabschnitt (315) an einer Deckenfläche (321a) des inneren Raums des zweiten Rahmens (320) geformt ist, so dass er in die Hohlstruktur (H5) des Befestigungsrohrs (212) der zweiten Batteriemodulgruppe (200G2) eingeführt ist.

6. Batteriepack nach Anspruch 1,
wobei eine in einer Oben- und Unten-Richtung oder in einer Vorne- und Hinten-Richtung geriffelte Sickenstruktur (310b, 320b) an wenigstens einem aus den gebogenen Abschnitten des ersten Rahmens und des zweiten Rahmens (310, 320), einer Bodenfläche des inneren Raums des ersten Rahmens, und einer Deckenfläche des inneren Raums des zweiten Rahmens geformt ist.

7. Batteriepack nach Anspruch 1,
wobei elektrische Komponenten, die dazu eingerichtet sind, Ströme der ersten Batteriemodulgruppe (200G1) und der zweiten Batteriemodulgruppe (200G2) oder Steueroperationen von diesen zu erfassen, an einer äußeren Seite der gebogenen Abschnitte des ersten Rahmens und des zweiten Rahmens angebracht sind.

8. Batteriepack nach Anspruch 7,
wobei eine Öffnungsregion (O1, O2) an dem gebogenen Abschnitt von jedem des ersten Rahmens und des zweiten Rahmens geformt ist, so dass eine Elektrische-Komponente-Bus-Schiene, die dazu eingerichtet ist, die Verbindungsplatte und die elektrischen Komponenten miteinander elektrisch zu verbinden, sich hervorstehend dadurch hindurch erstreckt.

9. Batteriepack nach Anspruch 1, ferner umfassend:
eine Verbindungsbusschiene (240), die ein elektrisch leitfähiges Material aufweist und dazu eingerichtet ist, die erste Batteriemodulgruppe (200G1) und die zweite Batteriemodulgruppe (200G2) elektrisch zu verbinden,
wobei die Verbindungsbusschiene (240) einen ersten Zugangsabschnitt (242), der dazu eingerichtet ist, die Verbindungsplatte (221) der ersten Batteriemodulgruppe (200G1) zu kontaktieren, einen zweiten Zugangsabschnitt (244), der dazu eingerichtet ist, die Verbindungsplatte (222) der zweiten Batteriemodulgruppe (200G2) zu kontaktieren und einen Umwegabschnitt (246) umfasst, der zwei Enden aufweist, die mit dem ersten Zugangsabschnitt beziehungsweise dem zweiten Zugangsabschnitt verbunden sind und von dem ersten Zugangsabschnitt und dem zweiten Zugangsabschnitt nach außen treten.

10. Batteriepack nach Anspruch 1,
wobei eine thermisch leitfähige Auflage (330) zu wenigstens einem Abschnitt einer äußeren Seitenfläche der Verbindungsplatte hinzugefügt ist.

11. Batteriepack nach Anspruch 1,
wobei die Anbringungsstruktur (300) ferner umfasst:
eine obere Platte (340), die derart angeordnet ist, dass sie einen oberen Abschnitt des ersten Rahmens (310) verdeckt; und
eine unter Platte (350), die derart angeordnet ist, dass sie einen unteren Abschnitt des zweiten Rahmens (320) nach oben stützt,
wobei ein sich nach innen hervorstehend erstreckender zweiter Einfügeabschnitt (343a) an der oberen Platte (340) oder der unteren Platte (350) geformt ist.

12. Elektronische Vorrichtung, umfassend den Batteriepack nach einem der Ansprüche 1 bis 11.

## Revendications

1. Bloc-batterie, comprenant :
- une structure de montage (300) comportant un premier cadre (310) formé dans une forme de plaque dont les deux extrémités sont pliées vers le haut pour former un espace intérieur, et un deuxième cadre (320) formé dans une forme de plaque dont les deux extrémités sont pliées vers le bas pour former un espace intérieur, dans lequel le cadre de montage (300) est configuré par le couplage du premier cadre (310) et du deuxième cadre (320) séparés l'un de l'autre ;
- un premier groupe de modules de batterie (200G1) logés dans l'espace intérieur du premier cadre (310) et comportant une pluralité de modules de batterie (200, 201, 202, 203, 204, 205, 206) agencés dans une direction avant et arrière ; et un deuxième groupe de modules de batterie (200G2) logés dans l'espace intérieur du deuxième cadre et comportant une pluralité de modules de batterie (207, 208, 209, 210, 211, 212, 213) agencés dans une direction avant et arrière,
dans lequel chaque module de batterie comporte :
une pluralité de cellules de batterie (100) cylindriques se dressant dans une direction supérieure et inférieure, ayant des bornes d'électrode (111) formées respectivement au niveau de leurs parties supérieure et inférieure et agencées dans une direction horizontale ;
un logement de module (210) comprenant un boîtier supérieur (210A) et un boîtier inférieur (210B), dans lequel le boîtier supérieur (210A) a un creux (H1) formé pour entourer une surface extérieure supérieure de la cellule de batterie (100) cylindrique et le boîtier inférieur (210B) est fixé à une partie inférieure du boîtier supérieur (210A), et le boîtier inférieur (210B) a un creux (H1) formé pour entourer une surface extérieure inférieure de la cellule de batterie (100) cylindrique, de sorte que les cellules de batterie (100) cylindriques y soient insérées et logées ; et
deux plaques de connexion (221, 222) situées respectivement au niveau de la partie supérieure et de la partie inférieure de la pluralité de cellules de batterie (100) cylindriques,
dans lequel les deux plaques de connexion (221, 222) comportent une pluralité de bornes de connexion (225c) disposées à des emplacements correspondant aux bornes d'électrode (111) de la pluralité de cellules de batterie (100), et
dans lequel la première plaque de connexion (221) comporte une partie de corps (225) située au niveau de la partie supérieure de la pluralité de cellules de batterie cylindriques et une partie de connexion (227) s'étendant de manière saillante depuis la partie de corps (225) pliées vers le bas, et la deuxième plaque de connexion comporte une partie de corps (225) située au niveau de la partie inférieure de la pluralité de cellules de batterie cylindriques et une partie de connexion (227) s'étendant de manière saillante depuis la partie de corps (225) pliées vers le haut, dans lequel l'extrémité pliée de la partie de connexion (227) est configurée pour entrer en contact avec une partie d'une autre plaque de connexion, dans lequel la partie de connexion (227) de la première plaque de connexion (221) a une structure d'expansion (221b) pour s'étendre de manière saillante plus loin vers l'avant jusqu'à une partie terminale la plus en avant du logement de module (210), et la partie de connexion (227) de la deuxième plaque de connexion (222) a une structure d'expansion (non représentée) pour s'étendre de manière saillante plus loin vers l'arrière jusqu'à une partie terminale la plus en arrière du logement de module (210), et dans lequel la partie de connexion (227) de la première plaque de connexion (221) est prévue pour entrer en contact électrique avec une partie de connexion (227) d'une deuxième plaque de connexion (222) prévue pour un autre module de batterie.

2. Bloc-batterie selon la revendication 1,
dans lequel le logement de module (210) comporte un tube de fixation (212) situé sur un côté extérieur dans une direction gauche et droite et ayant une structure creuse perforée dans une direction supérieure et inférieure, de sorte qu'une partie terminale de la structure creuse s'étende de manière saillante plus loin dans la direction supérieure et inférieure vers l'autre parmi une surface supérieure ou une surface inférieure du logement de module.

3. Bloc-batterie selon la revendication 2,
dans lequel un trou de guidage (H2) perforé dans la direction supérieure et inférieure est formé dans la partie de corps (225) de sorte que la partie terminale du tube de fixation (212) faisant saillie dans la direction supérieure et inférieure soit insérée dans celui-ci.

4. Bloc-batterie selon la revendication 2,
dans lequel la partie de connexion (227) est située pour faire face à des côtés extérieurs gauche et droit du tube de fixation (212).

5. Bloc-batterie selon la revendication 2,
dans lequel une partie d'insert (315) s'étendant de manière saillante vers le haut est formée au niveau d'une surface de fond de l'espace intérieur du premier cadre (310) de manière à être insérée dans la structure creuse (H5) du tube de fixation (212) du premier groupe de modules de batterie (200G1), et
dans lequel une partie d'insert (315) s'étendant de manière saillante vers le bas est formée au niveau d'une surface de plafond (321a) de l'espace intérieur du deuxième cadre (320) de manière à être insérée dans la structure creuse (H5) du tube de fixation (212) du deuxième groupe de modules de batterie (200G2).

6. Bloc-batterie selon la revendication 1,
dans lequel une structure de bourrelet (310b, 320b) striée dans une direction supérieure et inférieure ou dans une direction avant et arrière est formée sur au moins une parmi les parties pliées du premier cadre et du deuxième cadre (310, 320), une surface de fond de l'espace intérieur du premier cadre, et une surface de plafond de l'espace intérieur du deuxième cadre.

7. Bloc-batterie selon la revendication 1,
dans lequel des composants électriques configurés pour détecter des courants du premier groupe de modules de batterie (200G1) et du deuxième groupe de modules de batterie (200G2) ou pour commander leurs opérations sont montés sur un côté extérieur des parties pliées du premier cadre et du deuxième cadre.

8. Bloc-batterie selon la revendication 7,
dans lequel une région ouverte (O1, O2) est formée au niveau de la partie pliée de chacun parmi le premier cadre et le deuxième cadre, de sorte qu'une barre omnibus de composants électriques configurée pour connecter électriquement la plaque de connexion et les composants électriques les uns aux autres s'étend de manière saillante à travers celle-ci.

9. Bloc-batterie selon la revendication 1, comprenant en outre :
une barre omnibus de connexion (240) ayant un matériau conducteur d'électricité et configurée pour connecter électriquement le premier groupe de modules de batterie (200G1) et le deuxième groupe de modules de batterie (200G2),
dans lequel la barre omnibus de connexion (240) comporte une première partie d'accès (242) configurée pour entrer en contact avec la plaque de connexion (221) du premier groupe de modules de batterie (200G1), une deuxième partie d'accès (244) configurée pour entrer en contact avec la plaque de connexion (222) du deuxième groupe de modules de batterie (200G2), et une partie de déviation (246) ayant les deux extrémités respectivement connectées à la première partie d'accès et à la deuxième partie d'accès et s'échelonnant de la première partie d'accès et de la deuxième partie d'accès vers l'extérieur.

10. Bloc-batterie selon la revendication 1,
dans lequel une plage conductrice thermique (330) est ajoutée à au moins une partie d'une surface de côté extérieur de la plaque de connexion.

11. Bloc-batterie selon la revendication 1,
dans lequel la structure de montage (300) comporte en outre :
une plaque supérieure (340) située pour couvrir une partie supérieure du premier cadre (310) ; et
une plaque inférieure (350) située pour supporter une partie inférieure du deuxième cadre (320) vers le haut,
dans lequel une deuxième partie d'insert (343a) s'étendant de manière saillante vers l'intérieur est formée sur la plaque supérieure (340) ou la plaque inférieure (350).

12. Dispositif électronique, comprenant le bloc-batterie selon l'une quelconque des revendications 1 à 11.
